# EUROPÄISCHE PATENTANMELDUNG

(11) **EP 2 022 768 A2**
(43) Veröffentlichungstag der Anmeldung: **11.02.2009**
(21) Anmeldenummer: 08013813.4
(22) Anmeldetag: 01.08.2008
(51) Int. Cl.: C04B 14/24

(54) **Poröses Material, Verfahren zu dessen Herstellung und Verwendung**

(30) Priorität: 03.08.2007 DE 102007036812
(71) Anmelder: Veit Dennert KG Baustoffbetriebe, 96132 Schlüsselfeld (DE)
(72) Erfinder: Dennert, Frank, 96138 Burgebrach (DE); Dennert, Veit, Dr., 96120 Bischberg (DE)
(74) Vertreter: LOUIS, PÖHLAU, LOHRENTZ

(57) **Zusammenfassung**

Die Erfindung betrifft ein poröses Material, das einen Gehalt von Siliziumoxid in einem Bereich von 60 Gew.-% bis 85 Gew.-%, Aluminiumoxid in einem Bereich von 6 Gew.-% bis 20 Gew.% und Alkali- und/oder Erdalkalioxid und/oder Alkali- und/oder Erdalkalihydroxid in einem Bereich von 0 bis 15 Gew.-% aufweist. Ferner betrifft die Erfindung ein Verfahren zur Herstellung des porösen Materials als auch dessen Verwendung.
Das poröse Material wird als Verdickungsmittel, Wärmeschutzmaterial, Schalldämmmaterial, Füllstoff, Baumaterial, insbesondere als Leichzuschlagsstoff, Brandschutzmittel, Feuerfestmaterial, Chromatographiematerial und/oder Trägermaterial verwendet.

## Beschreibung

Die vorliegende Erfindung betrifft ein poröses Material, ein Verfahren zu dessen Herstellung als auch dessen Verwendung.

Poröse anorganische oder mineralische, üblicherweise in Granulatform vorliegende, Materialien weisen aufgrund ihrer porösen und relativ temperaturbeständigen Struktur interessante Eigenschaften auf. So werden diese Materialien bei verschiedensten Anwendungen, beispielsweise als Dämmstoffe, Füllstoffe, Leichtzuschlagsstoffe für Baustoffe, etc. verwendet.

Als poröse anorganische Materialien werden einerseits Schaumgläser, die auch als Blähgläser bezeichnet werden, verwendet.

Aus der DE 43 42 996 A1 ist ein Schaumglasgranulat bekannt, das als Hauptbestandteile Siliciumoxid mit einem Anteil von 68,5 bis 75 Masse-%, Natriumoxid mit einem Anteil von 10 bis 14 Masse-%, Calciumoxid mit einem Anteil von 6 bis 11 Masse-% sowie des weiteren als Nebenbestandteile Al2O3 mit einem Anteil von 1,8 bis 3 Masse-%, K2O mit einem Anteil bis zu 2,5 Masse-%, MgO mit einem Anteil von 0,5 bis 4 Masse-%, BaO mit einem Anteil von 0,5 bis 3 Masse-% enthält als auch weitere unterhalb einem Anteil von 1 Masse-% liegenden Bestandteile.

Nachteilig ist, dass bei der Herstellung von Schaumglas entweder auf neu hergestelltes Glas oder auf Recyclingglas zurückgegriffen werden muss. Bei Verwendung von neu hergestelltem Glas kann eine einheitliche Glasqualität als Ausgangsmaterial bei der Herstellung von Schaumglas eingesetzt werden. Hierbei ist jedoch nachteilig, dass zunächst in einem energetisch aufwendigen Verfahren Glas hergestellt und nachfolgend ebenfalls in einem energetisch aufwendigen Verfahren das so hergestellte Glas auf eine Korngröße von üblicherweise < 40 µm vermahlen werden muss, um zur Herstellung von Schaumglas verwendet werden zu können.

Bei Verwendung von Recyclingglas stellt sich zum einen das Problem der unterschiedlichen Glasqualitäten sowie etwaiger Verunreinigungen und zum anderen auch das Problem, dass das Recyclingglas ebenfalls in einem energetisch aufwendigen Verfahren, wie vorstehend ausgeführt, auf eine Korngröße von < üblicherweise 40 µm vermahlen werden muss. Darüber hinaus sind die Preise für Recyclingglas mittlerweile so angestiegen, dass sie einen erheblichen Kostenfaktor bei der Herstellung von Schaumglas darstellen.

Neben Schaumglas werden auch poröse geblähte Granulate verwendet, die aus Klärschlamm, Flugasche und Tonsubstanz hergestellt sind, wie beispielsweise in der DE 39 08 172 A1 beschrieben. Gemäß der DE 39 08 172 A1 soll ein Granulat ohne offene Porosität bereitgestellt werden, so dass die im Klärschlamm oder der Flugasche enthaltenen Schadstoffe in dem hergestellten porösen geblähten Granulat eingeschlossen sind. Im Hinblick auf das zunehmende Umweltbewusstsein ist die allgemeine Akzeptanz und damit die allgemeine Verwendbarkeit eines aus Klärschlamm und Flugasche hergestellten porösen Granulats, beispielsweise in Form eines Pflanzgranulats in privaten Haushalten oder Gärten, zunehmend eingeschränkt.

Aus der DE 12 84 348 C2 ist ein Verfahren zur Herstellung von Blähton bekannt, bei dem Ton unter Verwendung von Flussmittel sowie gegebenenfalls Blähhilfsstoffen und Wasser zunächst in ein Rohgranulat und nachfolgend unter Blähung zu Blähton verarbeitet wird.

Nachteilig ist, dass bei der Herstellung von Blähton große Anteile von relativ steifer Tonsubstanz verarbeitet werden müssen, was entsprechend starke mechanischen Verarbeitungsvorrichtungen erfordert. Ferner ist nachteilig, dass der so erhaltene Blähton stets eine starke rote bis schwarze Eigenfarbe aufweist, was die Verwendbarkeit des erhaltenen Blähtons, beispielsweise als Zuschlagsstoff oder Verdickungsmittel einschränkt. Beispielsweise würde die Verwendung von Blähton als Verdickungsmittel in hellen Farben oder Dichtmassen zu einer rötlichen bis schwarzen Einfärbung führen, was unerwünscht ist. Ferner ist nachteilig, dass während des Blähvorganges zur Herstellung von Blähton relativ hohe Temperaturen angelegt werden müssen, was im Hinblick auf die steigenden Energiepreise sehr nachteilig ist.

Eine Aufgabe der vorliegenden Erfindung ist es, ein preisgünstig herzustellendes poröses Material bereitzustellen, das eine breite Verwendbarkeit besitzt.

Ferner ist es Aufgabe der vorliegenden Erfindung, ein poröses Material bereitzustellen, das eine wenig störende Eigenfärbung aufweist.

Die der Erfindung zugrunde liegende Aufgabe wird durch Bereitstellung eines porösen Materials gelöst, wobei das poröse Material einen Gehalt von Siliciumoxid in einem Bereich von 60 Gew.-% bis 85 Gew.-%, Aluminiumoxid in einem Bereich von 6 Gew.-% bis 20 Gew.-% und Alkali- und/oder Erdalkalioxid und/oder Alkali- und/oder Erdalkalihydroxid in einem Bereich von 0 bis 15 Gew.-% aufweist.

Die Angabe Gewichtsprozent bezieht sich vorstehend und nachstehend jeweils auf das Gesamtgewicht des porösen Materials, sofern nicht anders angegeben.

Bevorzugte Weiterbildungen der Erfindung sind in den Unteransprüchen 2 bis 9 angegeben

Neben den angegebenen Bestandteilen von Siliciumoxid, Aluminiumoxid und optional Alkali- und/oder Erdalkalioxid und/oder Alkali- und/oder Erdalkalihydroxid können weitere Komponenten wie beispielsweise Eisenoxid und/oder Titanoxid, etc. in dem porösen Material der vorliegenden Erfindung enthalten sein. Die Summe sämtlicher Bestandteile ergibt jeweils 100 Gew.-%.

Das poröse Material gemäß der vorliegenden Erfindung zeichnet sich dadurch aus, dass es keine intensive Färbung aufweist. Vorzugsweise weist das poröse Material der vorliegenden Erfindung eine helle, vorzugsweise weiße bis hellgraue Farbgebung auf.

Somit lässt sich das poröse Material gemäß der vorliegenden Erfindung ohne weiteres als Additiv, beispielsweise in Farben, Baustoffen, Dichtmassen, Klebmassen etc. verwenden, ohne dass deren eingestellte Farbe durch das hinzugefügte poröse Material signifikant verändert wird.

Das Siliciumoxid liegt in dem porösen Material gemäß einer bevorzugten Ausführungsform als SiO₂ vor. Das Siliciumoxid kann aber auch zusammen mit Alkali- und/oder Erdalkalioxid und/oder Alkali- und/oder Erdalkalihydroxid auch als Alkalisilikat und/oder Erdalkalisilikat vorliegen.

Gemäß einer bevorzugten Ausführungsform liegen die Silikate als Natrium-und/oder Kaliumsilikate vor.

Es hat sich überraschend herausgestellt, dass das erfindungsgemäße poröse Material, verglichen mit herkömmlichen Schaumglas, über eine gute Alkaliresistenz verfügt. Herkömmliches Schaumglas ist gegenüber alkalischen Umgebungsbedingungen wenig beständig. Das erfindungsgemäße poröse Material zeichnet sich durch eine gute Alkaliresistenz aus. Somit kann das erfindungsgemäße poröse Material auch unter Bedingungen eingesetzt werden, die stark alkalisch sind.

Es hat sich gezeigt, dass das erfindungsgemäße poröse Material für 12 Stunden bei einer Temperatur von 180 °C bei Sattdampf unter 12 bar Druck in einer alkalischen Lösung von pH 12-13 gelagert werden kann, ohne dass das erfindungsgemäße poröse Material merklich angegriffen wird. Schaumglas wird unter diesen Bedingungen bereits teilweise an- bzw. aufgelöst.

Bei Lagerung von Schaumglas in Wasser bzw. einer wässrigen Zusammensetzung wird der pH-Wert des Wassers bzw. der wässrigen Zusammensetzung mit zunehmender Zeitdauer erhöht, d.h. in den alkalischen Bereich, beispielsweise in pH-Bereiche von pH 9 bis pH 12, verschoben. Es wird vermutet, dass diese pH-Wert-Änderung mit Hydrolysereaktionen der Glasoberfläche zusammenhängt. Eine pH-Wert-Änderung auf pH 9-10 ist bereits nach 1 h feststellbar.

Im Unterschied hierzu kommt es bei Lagerung des erfindungsgemäßen porösen Materials in Wasser bzw, in wässrigen Zusammensetzungen zu keiner Verschiebung des pH-Wertes in den vorgenannten alkalischen pH-Wertbereich. Vielmehr liegt der pH-Wert in einem Bereich von pH 6 bis 8, mithin im Neutralen.

Gemäß einer weiteren bevorzugten Ausführungsform weist das poröse Material der vorliegenden Erfindung einen Gehalt von Siliciumoxid in einem Bereich von 70 Gew.-% bis 80 Gew.-% und von Aluminiumoxid in einem Bereich von 8 Gew.-% bis 15 Gew.-% auf.

Vorzugsweise liegt der Gehalt von Alkali- und/oder Erdalkalioxid und/oder Alkali-und/oder Erdalkalihydroxid in dem erfindungsgemäßen porösen Material in einem Bereich von 1 bis 12 Gew.-% weiterbevorzugt von 4 bis 10 Gew.-%.

Vorzugsweise liegt das poröse Material partikulär, weiter bevorzugt in der Form von annähernd sphärischen Partikeln, vor. Die, vorzugsweise sphärischen, Partikel liegen dabei vorzugsweise als Granulat vor. Gemäß einer bevorzugten Variante liegt das Granulat mit einer mittleren, vorzugsweise absoluten, Korngrößenverteilung in einem Bereich von 0,005 bis 20 mm, vorzugsweise von 0,01 bis 10 mm vor. Das poröse Material kann aber auch als Granulat mit einer mittleren, vorzugsweise absoluten, Korngrößenverteilung in einem Bereich von 0,025 bis 5 mm, weiter bevorzugt von 0,05 bis < 2 mm, noch weiter bevorzugt von 0,1 bis 1 mm, vorliegen.

Insbesondere wenn das poröse Material als Füllstoff, beispielsweise in Farben, Lacken, Dichtmassen oder Klebemassen enthalten ist, ist es von Vorteil, wenn das Granulat sehr feinteilig ist, da dann zum einen die Verarbeitbarkeit erleichtert und/oder der optische Eindruck, beispielsweise einer Farb- oder Lackschicht, nicht beeinträchtigt wird. Bei größeren Partikeln kommt es zu einer Aufrauhung der aufgebrachten Farb- oder Lackschicht und mithin zur Lichtstreuung an diesen Partikeln. Bei Verwendung des porösen Materials in Dicht- oder Klebemassen ist es ebenfalls bevorzugt, dass das poröse Material sehr feinteilig ist, um unerwünschte Effekte durch zu große Partikel, die beispielsweise die Ausbildung einer dünnen Dicht- oder Klebeschicht verhindern, zu vermeiden.

Gemäß einer weiteren bevorzugten Ausführungsform ist das erfindungsgemäße poröse Material oberflächlich von einer geschlossenen Haut umhüllt. Vorzugsweise ist die geschlossene Haut im Wesentlichen wasserdicht, vorzugsweise wasserdicht.

Das Wasseraufnahmevermögen des erfindungsgemäßen porösen Materials beträgt vorzugsweise 0 bis 5 Masse-%, vorzugsweise 0,2 bis 3 Masse-%, noch weiter bevorzugt 0,5 bis 1 Masse-%, jeweils bezogen auf die Gesamtmasse des trockenen porösen Materials.

Herkömmliches Schaumglas weist eine Wasseraufnahme im Bereich von 10 bis 35 Masse-%, bezogen auf die Gesamtmasse des trockenen Schaumglases, auf.

Das Wasseraufnahmevermögen kann dabei gemäß DIN EN 1609 bestimmt werden.

Das hohe Wasseraufnahmevermögen von herkömmlichen Schaumglas begrenzt die Verwendbarkeit des Schaumglases als Additiv, beispielsweise als Verdicker, in Farben, Lacken, Dichtmassen, Klebemassen, etc., da das Schaumglas der jeweiligen Zusammensetzung Lösungsmittel, üblicherweise Wasser, entzieht. Aufgrund der Aufnahme des Lösungsmittels, üblicherweise Wasser, in das Schaumglas, dicken oder trocknen die Farben, Lacke, Dichtmassen, Klebemassen, Mörtel, Putze, Betone, etc. ein, wodurch deren Verwendbarkeit eingeschränkt oder unmöglich gemacht wird. Bei einem Zusatz von Schaumglas zu Lacken, Farben, Dichtmassen, Klebemassen, Putze, etc. äußert sich die Wasseraufnahme dahingehend, dass die Gebinde, beispielsweise Plastikbehältnisse, sich aufgrund der Volumenabnahme, die der Aufnahme des Lösungsmittels bzw. Wassers des Schaumglases in etwa entspricht, nach innen ausbuchten und mithin von Käufern, beispielsweise in einem Baumarkt, deswegen nicht mehr gekauft werden.

Das poröse Material gemäß der vorliegenden Erfindung kann aufgrund des äußerst geringen Wasseraufnahmevermögens hervorragend als Additiv oder Zuschlagsstoff zu flüssigen oder pastösen Zusammensetzungen verwendet werden, ohne dass die vorstehend im Hinblick auf Schaumglas beschriebenen Nachteile auftreten.

Auch herkömmliches Blähtongranulat weist ein signifikantes Wasseraufnahmevermögen auf, weswegen es unter anderem auch als Pflanzgranulat, bei dem erwünschterweise Wasser aufgenommen und gespeichert wird, verwendet wird.

Gemäß einer bevorzugten Variante ist das erfindungsgemäße Material ein expandiertes, vorzugsweise geblähtes, Gemisch, das Ton, Siliciumoxid und optional Alkali- und/oder Erdalkalioxid und/oder Alkali- und/oder Erdalkalihydroxid umfasst.

Der Aluminiumoxidanteil in dem erfindungsgemäßen porösen Material stammt bevorzugt aus Ton. Anstelle von Ton kann auch Tonerde verwendet werden.

Das poröse Material gemäß der vorliegenden Erfindung ist mithin aus preiswerten und allgemein erhältlichen Komponenten hergestellt.

Gemäß einer bevorzugten Ausführungsform wird das Alkalioxid und/oder Alkalihydroxid aus der Gruppe, die aus Lithiumoxid, Lithiumhydroxid, Natriumoxid, Natriumhydroxid, Kaliumoxid, Kaliumhydroxid und Mischungen davon besteht, ausgewählt. Besonders bevorzugt sind Natriumoxid, Natriumhydroxid, Kaliumoxid und/oder Kaliumhydroxid.

Das Alkalioxid und/oder Alkalihydroxid kann auch in der Form von Alkalimetallsilikaten, beispielsweise in der Form von Natronwasserglas und/oder Kaliwasserglas vorliegen.

Gemäß einer weiteren bevorzugten Variante ist das Siliciumoxid amorphes Siliciumoxid. Es hat sich gezeigt, dass das Siliciumoxid in dem porösen Material vorzugsweise als amorphes Siliciumoxid vorliegt.

Das poröse Material der vorliegenden Erfindung zeichnet sich ferner dadurch aus, dass es eine Schüttdichte von vorzugsweise 100 bis 700 kg/m³, vorzugsweise von 200 bis 600 kg/m³, aufweist.

Gemäß einer weiteren bevorzugten Ausführungsform weist das poröse Material der vorliegenden Erfindung eine Kornrohdichte von 0,2 bis 1,2 kg/dm³, vorzugsweise von 0,3 bis 1,0 kg/dm³, auf.

Aufgrund der geringen Kornrohdichte wird das Gewicht der Zusammensetzung, dem das erfindungsgemäße poröse Material zugesetzt wird, nicht signifikant erhöht. Da ein erhöhtes Gewicht grundsätzlich zu einer erschwerten Handhabung und zu erhöhten Transportkosten führt, eignet sich das poröse Material gemäß der vorliegenden Erfindung nicht nur im Hinblick auf das geringe Wasseraufnahmevermögen und die gute Alkaliresistenz, sondern auch im Hinblick auf die geringe Kornrohdichte hervorragend als Additiv, beispielsweise als Zuschlagsstoff für Baumaterialien oder als Verdicker in flüssigen oder pastösen Zusammensetzungen. Ebenfalls eignet sich das poröse Material der vorliegenden Erfindung zur Herstellung von leichtgewichtigen Bauelementen wie z.B. Platten oder Mauersteinen.

Gemäß einer weiteren bevorzugten Ausführungsform weist das poröse Material einen Schmelzpunkt in einem Bereich von ca, 900 bis 1300°C, vorzugsweise von 950 bis 1150°C auf.

Im Unterschied zu herkömmlichem Schaumglas, das aufgrund seiner Transformationstemperatur, die bereits bei 570°C beginnt, nicht bei hohen Temperaturen, beispielsweise in Feuerfestmaterialien, verwendet werden kann, kann das erfindungsgemäße poröse Material aufgrund seines erhöhten Schmelzpunktes auch bei erhöhten Temperaturen verwendet werden. Aufgrund des erhöhten Schmelzpunktes kann das poröse Material gemäß der vorliegenden Erfindung auch in Bereichen verwendet werden, bei denen eine erhöhte Feuerfestigkeit gegeben sein muss.

Somit eignet sich das poröse Material beispielsweise als Zuschlagsstoff in oder zur Herstellung von Feuerfestmaterialien, die bei Temperaturen von maximal bis etwa 1300°C verwendet werden.

Das erfindungsgemäße poröse Material kann aufgrund der Porosität auch als Wärmedämmstoff verwendet Werden.

Die Wärmeleitfähigkeit λ liegt bei dem erfindungsgemäßen porösen Material in einem Bereich von 0,04 bis 0,15 W/(m.K), vorzugsweise von 0,06 bis 0,1 W/(m·K), noch weiter bevorzugt von 0,07 bis 0,09 W/(m·K), Somit eignet sich das poröse Material gemäß der vorliegenden Erfindung hervorragend als Wärmedämmstoff, der sowohl zur Wärmedämmung, beispielsweise bei üblichen Umgebungstemperaturen in einem Bereich von -40 bis +50°C, beispielsweise bei der Isolation von Gebäuden, verwendet werden kann als auch als Feuerfestmaterial, beispielsweise zur Auskleidung von Heizkesseln, Brennöfen, Kalzinieröfen, etc., bei Temperaturen von bis zu 1300°C.

Die der Erfindung zugrunde liegende Aufgabe wird ferner durch Bereitstellung eines Verfahrens zur Herstellung des erfindungsgemäßen porösen Materials gelöst, wobei das Verfahren folgende Schritte umfasst:
(a) Vermengen von Ton, Siliciumoxid sowie optional Alkali- und/oder Erdalkalioxid und/oder Alkali- und/oder Erdalkalihydroxid mit Wasser unter Bereitstellen einer Suspension,
(b) Überführen der Suspension in, vorzugsweise weitgehend sphärische, Partikel unter Verflüchtigung des Wassers,
(c) Erhitzen der in Schritt (b) erhaltenen Partikeln unter Ausbildung des porösen Materials.

Bevorzugte Weiterbildungen sind in den Ansprüchen 11 und 12 angegeben.

Gemäß einer bevorzugten Weiterbildung der Erfindung werden in Schritt (b) die Partikel durch Granulieren, vorzugsweise unter Verwendung eines Granuliertellers, oder durch Sprühtrocknung erhalten.

Bei dem erfindungsgemäßen Verfahren wird gemäß einer Verfahrensvariante vorzugsweise das Siliciumoxid in einer feinteiligen Form, beispielsweise als Granulat oder Pulver, mit Ton und Alkali- und/oder Erdalkalioxid und/oder Alkali-und/oder Erdalkalihydroxid sowie Wasser vermengt. Anstelle von Ton kann selbstverständlich auch Tonerde verwendet werden.

Anstelle von Alkali- und/oder Erdalkalioxid können auch Alkali- und/oder Erdalkalioxid-erzeugende Ausgangsmaterialien, wie beispielsweise die entsprechenden Alkali- und/oder Erdalkalicarbonate bzw. -sulfate verwendet werden.

Das Siliciumoxid oder das Siliciumoxid-haltige Material liegt dabei vorzugsweise in einer Partikelgröße mit einem D₉₀-Wert von bis zu 100 µm, bevorzugt von 1 µm bis 50 µm, weiter bevorzugt von 5 µm bis 25 µm, vor.

Gemäß einer anderen Verfahrensvariante kann das Siliciumoxid aber auch in einer gelösten oder flüssigen Form im Schritt (a) verwendet werden.

Vorzugsweise handelt es sich beim Siliciumoxid um SiO₂.

Das Alkalioxid und/oder Alkalihydroxid ist vorzugsweise Natronlauge und/oder Kalilauge. Selbstverständlich kann das Alkalioxid auch in Form von Li₂O, Na₂O und/oder K₂O vorliegen. Alternativ kann auch Wasserglas verwendet werden. Wasserglas kann in der allgemeinen Form M₃HSiO₄ und/oder M₂H₂SiO₄ und/oder als MH₃SiO₄ vorliegen, wobei M vorzugsweise K oder Na ist. Das Wasserglas kann beispielsweise hergestellt werden, indem Kieselsäure H₄SiO₄ mit Alkalioxid und/oder Alkalihydroxid, wobei das Alkalimetall vorzugsweise Li, Na und/oder K ist, versetzt wird.

Gemäß einer bevorzugten Ausführungsform der Erfindung wird das Siliciumoxid aus der Gruppe ausgewählt, die aus amorphem SiO₂, Kieselsäure, amorpher Kieselsäure, Kieselgel, Kieselgur, Alkalimetallsilicat, Wasserglas und Mischungen davon besteht..

Als Siliciumoxid kann auch pyrogenes SiO₂, das durch Flammenhydrolyse von SiCl₄ hergestellt ist, verwendet werden.

Ebenso können als Siliciumoxid auch Kieselgele, wie beispielsweise Silicagele und/oder Kieselsäuregele, oder Kieselsole, wie beispielsweise Silicasol oder Kieselsäuresol, verwendet werden. Für die Zwecke der Erfindung können ebenfalls gebrauchte, ggf. verunreinigte, Kieselgele und/oder Kieselsole verwendet werden.

Überraschenderweise hat sich gezeigt, dass auch als Reinigungs-, Entfärbungs-, Filter-, Klär-, Träger- und/oder Speicherstoffe gebrauchte Kieselgele in der vorliegenden Erfindung verwendet werden kann. Kieselgele werden beispielsweise auch bei der Trocknung von Flüssigkeiten, der Trocknung und Reinigung von Industriegasen wie Luft, O₂, N₂, H₂, CO, CO₂, Ar oder Wasser-, Generator-, Misch-, Synthese-, Stadt-, Kokerei-, Hydrier-Gas oder Gebläsewind für Rohöl, komprimierten und zu verflüssigenden Gasen, etc. verwendet. Auch werden Kieselgele zur Raumtrocknung in Klimaanlagen, Isolierglaselementen und in Verpackungen feuchtigkeitsempfindlicher Güter sowie zur Einstellung von bestimmten Feuchtigkeitsgehalten in der Luft in Versammlungs-, Lager- und/oder Fabrikräumen verwendet. Ferner werden die Kieselgele als Adsorptionsmaterialien, beispielsweise bei chromatographischen Reinigungen, verwendet. Neu hergestellte Kieselgele als auch gebrauchte Kieselgele eignen sich als Siliciumoxid-Ausgangsmaterial bei der Herstellung des erfindungsgemäßen porösen Materials.

Ferner hat sich auch Kieselgur als Siliciumoxid-Ausgangsmaterial bei der Herstellung des erfindungsgemäßen porösen Materials als geeignet erwiesen. Für die Zwecke der vorliegenden Erfindung kann ebenfalls gebrauchtes, ggf. verunreinigtes, Kieselgur verwendet werden.

Optional können dem unter Schritt (a) hergestellten Gemenge auch Blähmittel oder Treibmittel, also allgemein gasabspaltende Mittel, wie beispielsweise Zucker, Braunstein, Soda, Natriumnitrat, Siliciumnitrit, etc., zugesetzt werden.

Der Zusatz eines Blähmittels oder Treibmittels ist jedoch nicht zwingend. So kann beispielsweise in Abhängigkeit von dem Gehalt an organischen Bestandteilen in dem Ton und/oder in dem verwendeten Siliciumoxid von dem Zusatz eines Blähmittels oder Treibmittels abgesehen werden. Die organischen Bestandteile des Tons oder des Siliciumoxids, beispielsweise von gebrauchtem Kieselgel oder gebrauchtem Kieselgur, werden im Schritt (c) beim Erhitzen zu CO₂ umgewandelt und wirken als Blähmittel oder Treibmittel.

Falls gewünscht, können in Schritt (a) weitere Additive, wie beispielsweise Bindemittel , Proteinschäume, chemische Schäummittel, etc. zugesetzt werden.

Als Bindemittel können beispielsweise anorganische Bindemittel, z. B. Wasserglas, und/oder organische Bindemittel, z. B. Zucker, Harze, etc. verwendet werden. Das Bindemittel kann die mechanische Stabilität des Grünkörpers erhöhen.

Es ist von Vorteil, dass die in Schritt (a) erhaltene Suspension, die auch als Schlicker bezeichnet werden kann, unter Zusatz von Wasser niedrigviskos gehalten werden kann. Aufgrund der niedrigen Viskosität kann die erhaltene Suspension beispielsweise durch Sprühtrocknung oder durch Einbringen in einen Wirbelschichttrockner in, vorzugsweise weitgehend sphärische, Partikel überführt werden. Die Sprühtrocknung kann beispielsweise in einem Sprühturm durchgeführt werden, wobei die versprühte Suspension in, vorzugsweise weitgehend sphärische, Partikel überführt wird, indem das Lösungsmittel, üblicherweise Wasser, während des Versprühens bzw. während des Fallens der versprühten Suspension sich verflüchtigt und die, vorzugsweise weitgehend sphärischen, Partikel ausgebildet werden. Die Suspension kann auch in eine Wirbelschicht eines Wirbelschichttrockners eingebracht werden, wobei sich die, vorzugsweise weitgehend sphärischen, Partikel in der Wirbelschicht unter ständiger Bewegung ausbilden und das Lösungsmittel, üblicherweise Wasser, sich verflüchtigt.

Aufgrund der niedrigviskosen Konsistenz der in Schritt (a) bereitgestellten Suspension kann die Suspension unter Verwendung von preiswerten Mischern homogenisiert werden. Dies ist ein großer Vorteil, verglichen mit der Herstellung von Blähton, bei der die zu blähende Ausgangsmischung eine hochviskose Konsistenz aufweist und entsprechend starke und mithin teure Mischaggregate erfordert. Ebenfalls ist bei dem erfindungsgemäßen Verfahren der erforderliche Energieeintrag in Schritt (a) wesentlich geringer als bei den entsprechenden Mischverfahren bei der Herstellung von Blähton.

Selbstverständlich ist es auch möglich, die in Schritt (a) erhaltene Suspension zunächst unter teilweiser Verflüchtigung des Lösungsmittels, üblicherweise Wasser, einzudicken und die erhaltene Paste auf herkömmliche Art und Weise zu granulieren, beispielsweise unter Verwendung eines Granuliertellers.

Die Überführung der Suspension in, vorzugsweise weitgehend sphärische, Partikeln, kann selbstverständlich auch bei erhöhter Temperatur erfolgen. Die Temperatur darf im Schritt (b) jedoch nicht so stark erhöht werden, dass es zu einer Entwicklung von Gas aus den gegebenenfalls verwendeten Blähmitteln oder Treibmitteln bzw. zur Entwicklung von CO₂ aus den gegebenenfalls enthaltenen organischen Bestandteilen kommt.

Die in Schritt (b) erhaltenen, vorzugsweise weitgehend sphärischen, Partikel können auch als Granulat-Grünkörper bezeichnet werden.

In Schritt (c) erfolgt dann das Erhitzen der in Schritt (b) erhaltenen Partikel bzw. der Granulat-Grünkörper bis zu einer Temperatur, die maximal dem Schmelzpunkt des herzustellenden porösen Materials gemäß der vorliegenden Erfindung liegt. Üblicherweise liegt die Temperatur unterhalb von etwa 1300°C. Vorzugsweise liegt die Temperatur in einem Bereich von etwa 800°C bis 1250°C, weiter bevorzugt in einem Bereich von etwa 900°C bis 1200°C. Als sehr geeignet hat sich ein Temperaturbereich von 950 bis 1150°C erwiesen.

Äußerst vorteilhaft liegt die in Schritt (c) an den Granulat-Grünkörper anzulegende Temperatur ca. 100 bis 150°C unter der entsprechenden Temperatur bei der Herstellung von Blähton.

Der in dem erfindungsgemäßen Verfahren in Schritt (b) bereitgestellte Grünkörper geht mithin bei niedrigeren Temperaturen, vorzugsweise im Bereich von etwa 950 bis 1150°C, in eine niedrigviskose Konsistenz über, der von den, beispielsweise aus Blähmittel, Treibmittel und/oder organischen Bestandteilen, etc., entstehenden Gasen unter Ausbildung des erfindungsgemäßen porösen Materials gebläht oder expandiert wird.

Der entsprechende viskose Zustand bei der Herstellung von Blähton wird bei dem dort zu verwendenden Ausgangsmaterial erst bei Temperaturen erreicht, die etwa 100 bis 150°C über den Temperaturen bei dem erfindungsgemäßen Verfahren liegen.

Eine um 100 bis 150°C niedrigere Temperatur während des Blähens bzw. Expandierens des Granulat-Grünkörpers bedeutet eine signifikante Energieeinsparung, da es sich bei dem erfindungsgemäßen porösen Produkt um ein Material handelt, das in großen Mengen hergestellt wird.

Die der Erfindung zugrunde liegende Aufgabe wird ferner durch die Verwendung des porösen Materials als Verdickungsmittel, Wärmeschutzmaterial, Schalldämmmaterial, Füllstoff, Baumaterial, insbesondere als Leichtzuschlagstoff, Brandschutzmittel, Feuerfestmaterial, Chromatographiematerial und/oder Trägermaterial gelöst.

Das erfindungsgemäße poröse Material eignet sich in besonderem Hinblick auf das äußerst geringe, vorzugsweise nicht vorhandene, Wasseraufnahmevermögen hervorragend als Verdickungsmittel für Farben, Lacke, Dichtmassen, Klebemittel, Putze, Mörtel, Betone, etc. Bei den vorgenannten Materialien führt der Zusatz des erfindungsgemäßen porösen Materials nicht zu einer nachträglichen Viskositätserhöhung oder Trocknung, da das erfindungsgemäße poröse Material kein Lösungsmittel, üblicherweise Wasser, aufnimmt oder nur geringfügige Mengen an Lösungsmittel bzw. Wasser aufnimmt. Somit können flüssige oder pastöse Massen als Fertigprodukt am Markt angeboten werden, ohne dass die Gefahr einer Konsistenzänderung besteht.

Ferner eignet sich das poröse Material als Wärmeschutzmaterial und/oder Schalldämmmaterial, wobei das poröse Material sowohl in Granulatform als solches eingesetzt werden kann oder aber auch bei der Herstellung von Bauelementen, wie beispielsweise Platten, Mauersteinen, etc., wie z.B. von Ziegelsteinen, Kalksteinen, Kalksandsteinen, etc. verwendet werden kann.

Auch eignet sich dass erfindungsgemäße poröse Material als Zuschlagstoff, z.B. als Leichtzuschlagstoff, bei der Herstellung von Beton oder Betonelementen. Zum einen wird hierdurch das Gewicht der Baumaterialien bzw- -elemente abgesenkt und zum anderen werden die Wärmeschutz- und Schalldämmeigenschaften verbessert.

Ebenfalls kann das erfindungsgemäße poröse Material aufgrund der niedrigen Wärmeleitfähigkeit und im Hinblick auf die erhöhte Temperaturbeständigkeit als Brandschutzmittel bzw. als Füllstoff oder Additiv bei Brandschutzmitteln verwendet oder aber auch als Feuerfestmaterial werden.

Schließlich eignet sich das erfindungsgemäße poröse Material auch als Trägermaterial für funktionelle Gruppen bei chromatographischen Reinigungsverfahren oder als Träger von Katalysatorstoffen bzw. -partikeln. Mithin kann das erfindungsgemäße poröse Material als Träger bei der heterogenen Katalyse verwendet werden.

Schließlich eignet sich das poröse Material gemäß der vorliegenden Erfindung auch zur Herstellung von Formkörpern.

Beispielsweise ist es möglich, den in Schritt (b) erhaltenen Granulat-Grünkörper in einer Form zu erhitzen, so dass in Schritt (c) die Grünkörper nicht nur gebläht bzw. expandiert, sondern zugleich unter Ausbildung eines Formkörpers zusammen gesintert werden.

Alternativ ist es selbstverständlich möglich, das erfindungsgemäße poröse Material als Granulat in eine Form zu füllen und so zu erhitzen, dass die porösen Partikel unter Ausbildung eines Formkörpers zusammen sintern.

Der Formkörper kann beispielsweise in der Form von üblichen Bauelementen, beispielsweise in Plattenform oder als Mauerstein, vorliegen.

Die Aufgabe der Erfindung wird ferner durch einen Gegenstand gelöst, der das erfindungsgemäße poröse Material enthält oder aufweist, wie beispielsweise Wärmeschutzmaterial, Metalldämmmaterial, Bauelement, etc.

Vorzugsweise ist der Gegenstand der Erfindung ein Bauelement, Wärmeschutzmaterial, Schalldämmmaterial, Feuerfestmaterial und/oder Trägermaterial.

Die Erfindung wird nachfolgend durch Beispiele erläutert, ohne hierauf beschränkt zu sein.

### Beispiel 1

In einem Disolver wurden zur Herstellung von 100 kg Granulat
47 kg Ton (Typ 15/71 der Fa, Goerg & Schneider, Siershahn),
37 kg SiO₂-Mehl (Legralmehl Typ 400 der Fa. Poroceram, Viereth),
35 Liter Wasserglas (Typ Betol 39T3 der Fa. Woellner, Ludwigshafen),
mit 30 Litern Wasser vermischt und gut homogenisiert.
Im Anschluss wurden noch 1,6 kg Siliciumnitrit der Fa. Wacker, Burghausen, dazugemischt.

Zur Einstellung der Viskosität wurden etwa 6 Liter Wasser eindosiert. Eine Gesamtmischzeit von 15 min war ausreichend.

Nach dem Mischen wurde die dadurch erhaltene Schlämme in einen Rührwerksbehälter gepumpt, in dem sie für ca. 48 h verweilte und dabei etwas eindickte.

Danach wurde die Schlämme zur Verringerung der Endviskosität nochmals mit ca. 3 Liter Wasser verrührt. Über eine am Rührwerksbehälter angeschlossene Hochdruckpumpe gelangte das Material in einen Wirbelschichtgranulierer, in dem die Suspension zu einem Granulat-Grünkörper z. B. auf eine Korngröße von etwa 1,5 mm versprüht und getrocknet wurde.

Im Anschluss wurde der Granulat-Grünkörper in einem Drehofen innerhalb von Sekunden erhitzt und mit 1100°C gebrannt. Die Verweilzeit im Ofen betrug max. 5 min.

Um Verklebungen des Granulats im Ofen zu vermeiden, wurde als Trennmittel Aluminiumoxidpulver in den Ofen mit dazugegeben. Dies wurde nach dem Brand zur erneuten Wiederverwendung ausgesiebt.

Das hergestellte poröse Material in Granulatform hatte nun einen Korngrößendurchmesser von ca. 2-4 mm.

Das in Beispiel 1 erhaltene poröse Material hat die in Tabelle 1 angegebene chemische Zusammensetzung. Zum Vergleich ist die chemische Zusammensetzung von herkömmlichen Blähton (Blähton Liapor 4/8, Fa. Liapor, Industriestr, 2, 91352 Hallerndorf-Pautzfeld, Deutschland, sowie von Schaumglas Liaver 2/4, Fa. Liaver, Ilmenau, Deutschland, angegeben.

**Tabelle 1**

| | **Poröses Material gemäß der Erfindung** | **herkömmlicher Blähton** | **herkömmliches Schaumglas** |
|---|---|---|---|
| **SiO₂** | 79,5 % | 55,0 % | 65 - 75 % |
| **Al₂O₃** | 11 % | 24,0 % | 1 - 5 % |
| **Fe₂O₃** | 1 % | 14,0 % | --- |
| **TiO₂** | 0,7 % | keine Angabe | --- |
| **Na₂O** | 7,0 % | 1,0 % | 9 - 18 % |
| **K₂O** | 1,0 % | 1,0 % | 0 - 7 % |
| **CaO** | 1,6 % | 5,0 % | 0 - 15 % |
| **mgO** | 2,0 % | keine Angabe | 0 - 8 % |

In Tabelle 2 sind die physikalischen Eigenschaften des erfindungsgemäßen porösen Materials im Vergleich zu herkömmlichem Blähtongranulat und Schaumglas zusammengestellt.

| | **Poröses Material gemäß der Erfindung** | **Blähtongranulat** | **Schaumglas** |
|---|---|---|---|
| **Basisrohstoff** | Ton-Kieselsäure | Blähton | Recyclingglas |
| **Korngröße mm** | 0,005 - 20 mm | 2 - 20 mm | 0,050 - 16 mm |
| **Festigkeit** | 1 - 5 N/mm² | 2 - 8 N/mm² | 0,5 - 3 N/mm² |
| **Schüttgewicht** | 150 - 600 kg/m³ | 250 - 800 kg/m³ | 140 - 500 kg/m³ |
| **Kornrohdichte** | 0,3 - 1,0 kg/dm³ | 0,5 - 1,4 kg/dm³ | 0,3 - 1,0 kg/dm³ |
| **pH-Wert** | 6-8 | 6 - 8 | 9-12 |
| **Wasseraufnahme** | 0 - 5 Masse-% | 0 - 10 Masse-% | 10 - 35 Masse-% |
| **Farbe** | hellgrau | ziegelrot bis schwarz | grau bis cremeweiß |
| **Feuerfestigkeit** | 1000 °C | 1000 °C | 570 °C |
| **Brandklasse** | A1 | A1 | A1 |
| **Schmelzpunkt** | ca. 1300 °C | ca. 1400 °C | Ab 900 °C zähflüssig |
| **Wärmeleitfähigkeit** λ | 0,08 W/(m·K) | 0,1 W/(m·K) | 0,07 |
| **Alkaliresistenz** | gut | gut | schlecht |
| **Festigkeitsabfall im Autoklaven** | gering | gering | hoch |

Wie Tabelle 2 entnommen werden kann, unterscheidet sich das erfindungsgemäße poröse Material insbesondere im Hinblick auf, die Farbe, das Wasseraufnahmevermögen, den pH-Wert, die Alkallresistenz, die Feuerfestigkeit und die Wärmeleitfähigkeit.

Das Wasseraufnahmevermögen wurde gemäß DIN EN 1609 bestimmt.

Der pH-Wert wurde bestimmt, indem 100g partikuläres Material mit einer Korngröße von 2-4 mm in 1 I Wasser bis 20°C für 7 Tage gelagert wurde. Der pH-Wert wurde dann mit einer pH-Wert-Sonde gemessen.

Die Alkaliresistenz wurde bestimmt, indem ein haufwerksporiger Prüfkörper in Würfelform mit Kantenlänge 150 · 150 · 150 mm aus dem jeweiligen partikulären Material mit einer Korngröße von 2-4 mm, gebunden mit einem kalkhaltigen Bindemittel (Kalkhydrat, Zement und Quarzmehl), in einer Sattdampfatmosphäre bis ca. 180°C und 12 bar Druck für 12 h autoklaviert wurde. Nach Abkühlen auf Zimmertemperatur wurde die mechanische Stabilität des Prüfkörpers in einer Druckprüfpresse bestimmt. Darüber hinaus wurde der Zersetzungsgrad des Prüfkörpers visuell ermittelt. Ein geringer Festigkeitsabfall des Prüfkörpers ist gleichbedeutend mit einer guten Alkaliresistenz bzw. ein hoher Festigkeitsabfall gleichbedeutend mit einer schlechten Alkaliresistenz.

Die Feuerfestigkeit wurde gemäß DIN 51045 bestimmt.

Die Wärmeleitffähigkeit wurde gemäß DIN 52612 bestimmt.

Wie dem pH-Wert entnommen werden kann, wird bei Verwendung von Schaumglas in einem wässrigen Medium der pH-Wert signifikant abgesenkt, so dass die Zusammensetzung zunehmend alkalisch wird. Das erfindungsgemäße poröse Material zeichnet sich durch seine pH-Neutralität aus, d. h. es erfolgt keine signifikante Veränderung des pH-Wertes eines wässrigen Mediums. Ein weitere signifikanter Unterschied liegt in dem äußerst geringen Wasseraufnahmevermögen und der guten Alkaliresistenz des erfindungsgemäßen porösen Material im Vergleich zu dem herkömmlichen Schaumglas.

Das erfindungsgemäße poröse Material unterscheidet sich von herkömmlichem Blähtongranulat auch durch ein geringeres Wasseraufnahmevermögen, insbesondere durch die nur leichte Färbung des porösen Materials, den geringeren Schmelzpunkt und eine verbesserte Wärmeleitfähigkeit. Des weiteren zeichnet sich das erfindungsgemäße poröse Material durch ein verringertes Schüttgewicht bzw. eine verringerte Kornrohdichte im Vergleich zu Blähtongranulat aus, was im Hinblick auf Transport und Handhabung des erfindungsgemäßen porösen Materials bzw. von Zusammensetzungen oder Bauelementen, die das erfindungsgemäße poröse Material enthalten, von großem Vorteil ist.

## Patentansprüche

1. Poröses Material,
**dadurch gekennzeichnet,**
**dass** das poröse Material einen Gehalt von
Siliziumoxid in einem Bereich von 60 Gew.-% bis 85 Gew.-%,
Aluminiumoxid in einem Bereich von 6 Gew.-% bis 20 Gew.% und
Alkali- und/oder Erdalkalioxid und/oder Alkali- und/oder Erdalkalihydroxid in einem Bereich von 0 bis 15 Gew.-% aufweist.

2. Poröses Material nach Anspruch 1,
**dadurch gekennzeichnet,**
**dass** das poröse Material einen Gehalt von Alkali- und/oder Erdalkalioxid und/oder Alkali- und/oder Erdalkalihydroxid in einem Bereich von 1 bis 12 Gew.-%, weiter bevorzugt von 4 bis 10 Gew.-% aufweist.

3. Poröses Material nach einem der vorhergehenden Ansprüche,
**dadurch gekennzeichnet,**
**dass** das poröse Material oberflächlich von einer geschlossenen Haut umhüllt ist.

4. Poröses Material nach einem der vorhergehenden Ansprüche,
**dadurch gekennzeichnet,**
**dass** das Wasseraufnahmevermögen des porösen Materials 0 bis 5 Masse-%, vorzugsweise 0,2 bis 3 Masse-%, weiter bevorzugt 0,5 bis 1 Masse-%, jeweils bezogen auf die Gesamtmasse des trockenen porösen Materials, beträgt.

5. Poröses Material nach einem der vorhergehenden Ansprüche,
**dadurch gekennzeichnet,**
**dass** das poröse Material ein expandiertes, vorzugsweise geblähtes, Gemisch, das Ton, Siliciumoxid und optional Alkali- und/oder Erdalkalioxid und/oder Alkali-und/oder Erdalkalihydroxid umfasst, ist.

6. Poröses Material nach einem der vorhergehenden Ansprüche,
**dadurch gekennzeichnet,**
**dass** das poröse Material als Granulat mit einer mittleren, vorzugsweise absoluten, Korngrößenverteilung von 0,005 bis 20 mm, vorzugsweise von 0,01 bis 10 mm, vorliegt.

7. Poröses Material nach einem der vorhergehenden Ansprüche,
**dadurch gekennzeichnet,**
**dass** das poröse Material eine Schüttdichte von 100 bis 700 kg/m³, vorzugsweise von 200 bis 600 kg/m³, aufweist.

8. Poröses Material nach einem der vorhergehenden Ansprüche,
**dadurch gekennzeichnet,**
**dass** das poröse Material eine Kornrohdichte von 0,2 bis 1,2 kg/dm³, vorzugsweise von 0,3 bis 1,0 kg/dm³, aufweist.

9. Poröses Material nach einem der vorhergehenden Ansprüche,
**dadurch gekennzeichnet,**
**dass** das poröse Material einen Schmelzpunkt in einem Bereich von ca. 1000 bis 1300°C, vorzugsweise von 950 bis 1150°C, aufweist.

10. Verfahren zur Herstellung des porösen Materials nach einem der vorhergehenden Ansprüche,
**dadurch gekennzeichnet,**
**dass** es folgende Schritte umfaßt:
(a) Vermengen von Ton, Siliciumoxid sowie optional Alkali- und/oder Erdalkalioxid und/oder Alkali- und/oder Erdalkalihydroxid mit Wasser unter Bereitstellen einer Suspension,
(b) Überführen der Suspension in, vorzugsweise weitgehend sphärische, Partikel unter Verflüchtigung des Wassers,
(c) Erhitzen der in Schritt (b) erhaltenen Partikeln unter Ausbildung des porösen Materials.

11. Verfahren nach Anspruch 10,
**dadurch gekennzeichnet,**
**dass** in Schritt (c) das Erhitzen bis auf eine Temperatur unterhalb des Schmelzpunktes des porösen Materials erfolgt.

12. Verfahren nach einem der Ansprüche 10 oder 11,
**dadurch gekennzeichnet,**
**dass** in Schritt (a) und/oder (b) zusätzlich Additive, beispielsweise Blähmittel, Bindemittel, etc., hinzugefügt werden.

13. Verwendung des porösen Materials nach einem der Ansprüche 1 bis 9 als Verdickungsmittel, Wärmeschutzmaterial, Schalldämmmaterial, Füllstoff, Baumaterial, insbesondere als Leichtzuschlagsstoff, Brandschutzmittel, Feuerfestmaterial, Chromatographiematerial und/oder Trägermaterial.

14. Verwendung des porösen Materials nach einem der Ansprüche 1 bis 9 zur Herstellung von Formkörpern.

15. Gegenstand,
**dadurch gekennzeichnet,**
**dass** der Gegenstand poröses Material nach einem der Ansprüche 1 bis 9 enthält oder aufweist.
